# EUROPEAN PATENT APPLICATION

(11) **EP 1 895 275 A2**
(43) Date of publication of application: **05.03.2008**
(21) Application number: 07253350.8
(22) Date of filing: 24.08.2007
(51) Int. Cl.: G01C 22/00

(54) **Pedometer**

(30) Priority: 29.08.2006 JP 2006232186
(71) Applicant: Seiko Instruments Inc., Chiba-shi, Chiba (JP)
(72) Inventor: Tsubata, Keisuke, Chiba-shi Chiba (KR)
(74) Representative: Cloughley, Peter Andrew

(57) **Abstract**

A pedometer which can perform a step counting more correctly by finely adjusting the detection sensitivity freely while suppressing the element-based variations and individual difference effects is provided.

An acceleration sensor outputs a walk signal having a charge corresponding to a walk. The walk signal is converted by charge-voltage conversion means into a voltage walk signal, removed of noise by filter means, amplified by amplification means and converted by binarization means into a digital signal, followed by being inputted to a CPU. The CPU performs open-close control of switches, such that the walking pitch, calculated based on the walk signal, comes within a predetermined walking pitch range stored in the storage means thereby controlling the conversion gain of the charge-voltage conversion means and controlling the walk detection sensitivity properly.

## Description

The present invention relates to a pedometer adapted to detect a walk and take count of steps of walking.

### 2. Description of the Related Art

Conventionally, development has been made for a pedometer for use in a state worn on the body, such as the wrist or the waist, of a user or put in a bag the user carries, to take count of steps of the user (see Patent Document 1 described below, for example).

Generally, variations are encountered in a sensitivity of a walk detector section. The factors of variation in detection sensitivity, caused due to pedometer elements, are attributable to the sensor itself that detects a walk and the circuit system (filter, amplifier circuit, etc.) that post-processes the walk signal outputted from the sensor. In addition, walk pattern is different on the individual basis from user to user. In order to take count of steps correctly, detection sensitivity must be established in a manner compatible with the individual difference.

In this manner, in order to correctly take count of steps, there is a need of properly setting up a walk detection sensitivity in consideration of component-based variations and user-to-user difference. In order to absorb various types of variations and individual differences, fine adjustment is required for the walk detection sensitivity of the walk detector section.

As a method of adjusting the sensitivity of detection, a method can be considered which is to adjust the detection sensitivity of a walk detector section by adjusting the gain of the amplifier circuit through switching over the gain-adjustment resistances of the amplifier circuit included in the walk detector section.

However, in the case of adjusting the gain of the amplifier circuit by switching over the resistances, the resistances in general use are great in resistance value and hence difficultly combined to conduct a fine adjustment.

Meanwhile, where an amplifier circuit having also a filter function is used as a noise-removing filter for the walk detector section to thereby adjust the gain of the amplifier circuit, the filter characteristic changes if adjusting the gain of the amplifier circuit. Thus, there is problematically a difficulty in finely adjusting the detection sensitivity without encountering any restriction.

Patent Document 1: JP-A-2005-283339 (paragraphs [0025] - [0045], Figs. 1 and 2)

It is an object of the present invention to enable, on a pedometer, a step counting more correctly by finely adjusting the detection sensitivity without restrictions while suppressing the element-based variations and individual difference effects.

According to the present invention, there is provided a pedometer comprising: walk detecting means having a sensor that detects a walk and outputs a corresponding charge walk signa 1 and charge-voltage converting means that converts a walk signal of from the sensor into a corresponding voltage walk signal to output, to thereby detect a walk and output a corresponding walk signal; calculating means that calculates a step count based on the walk signal of from the walk detecting means; and control means that controls a detection sensitivity of the walk detecting means by controlling a gain of the charge-voltage converting means.

The sensor, included in the walk detecting means, is to detect a walk and output a walk signal having a corresponding charge. The charge-voltage converting means, included in the walk detecting means, is to convert a walk signal of from the sensor into a corresponding voltage walk signal to output. The calculating means is to calculate a step count based on the walk signal of from the walk detecting means. The control means is to control a detection sensitivity of the walk detecting means by controlling a gain of the charge-voltage converting means.

Here, there may be comprised of input means for inputting a detection sensitivity of the walk detecting means, wherein the control means, in a manual control mode for manually controlling the detection sensitivity of the walk detecting means, is to control the gain of the charge-voltage converting means to a detection sensitivity inputted from the input means.

Meanwhile, there may be comprised of first storage means chat stores a predetermined walking pitch range, wherein the calculating means is to further calculate a walking pitch depending upon the walk signal, the control means, in an auto control mode for automatically controlling the detection sensitivity of the walk detecting means, being to control the gain of the charge-voltage concerting means such that the walking pitch, calculated by the calculating means, comes within the walking pitch range stored in the first storage means.

Meanwhile, the predetermined walking pitch range may be set with an upper limit value smaller than twice a lower value.

Meanwhile, the charge-voltage converting means may have a capacitor circuit having a plurality of capacitors for determining a gain, and switch means for controlling a capacitance value of the capacitor circuit, the control means controlling the gain of the charge-voltage converting means by controlling the capacitance value of the capacitor circuit through open-close controlling the switch means.

Meanwhile, there may be comprised of second storage means that stores an open/close status of the switch means, the control means being to store an open/close status of the switch means, placed under open-close control, in the second storage means, and to control, before starting a step counting, the switch means to the open/close status stored in the storage means.

Meanwhile, the charge-voltage converting means may have an amplifier circuit that outputs a walk signal corresponding to a voltage which the walk signal of from the sensor is amplified, the capacitor circuit being a feedback circuit for the amplifier circuit.

According to the pedometer of the invention, detection sensitivity can be finely adjusted freely while suppressing element-based variations and individual difference effect.

Embodiments of the present invention will now be described by way of further example only and with reference to the accompanying drawings, in which:
Fig. 1 is a block diagram of a pedometer according to a first embodiment of the present invention.
Fig. 2 is a flowchart showing the process for the pedometer according to the first embodiment of the invention.
Fig. 3 is a timing chart of the pedometer according to the first embodiment of the invention.
Fig. 4 is a block diagram of a charge-voltage converting means used in a second embodiment of the invention.
Fig. 5 is a block diagram of a charge-voltage converting means used in a third embodiment of the invention.

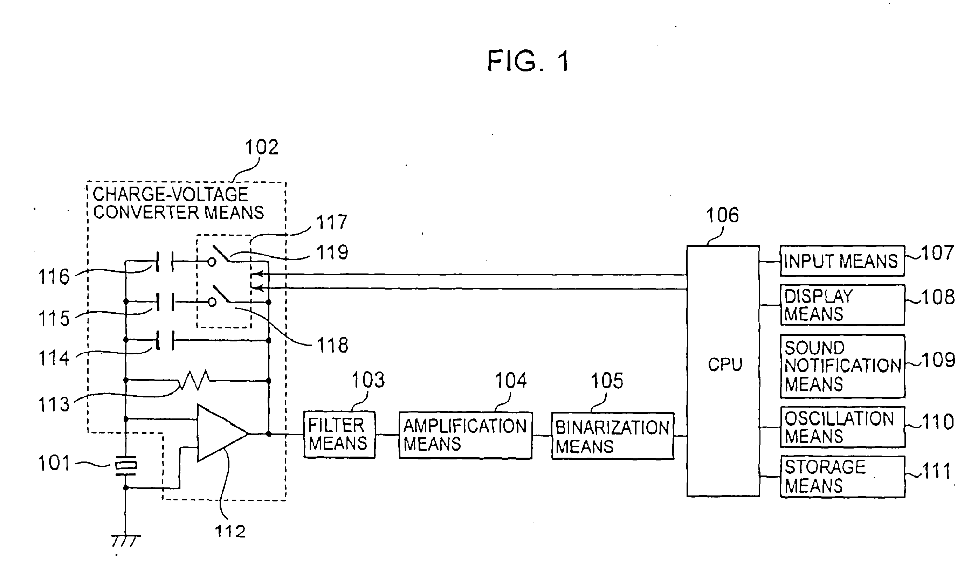

Fig. 1 is a block diagram of a pedometer according to a first embodiment of the present invention, illustrating an example of a pedometer structured to be used by being carried in a state worn on the wrist or waist or accommodated in a bag cr the like.

In Fig. 1, the pedometer has an acceleration sensor 101 that detects a walk (including a run) of the user and outputs a charge signal (walk signal) corresponding to the walk, charge-voltage converting means 102 that converts the charge walk signal of from the acceleration sensor 101 into the corresponding voltage walk signal to output, filter means 103 that outputs a walk signal removed of noise from the output signal of from the charge-voltage converting means 102, amplification means 104 that amplifies the walk signal from the filter means 103 and outputs a walk signal in an analog form, and binarization means 105 that waveform-shapes the walk signal from the amplification means 104 and outputs a walk signal in the form of a binary digital signal.

Incidentally, the acceleration sensor 101, a device that generates a charge commensurate with acceleration, is to output a corresponding charge walk signal each time walking is detected.

Meanwhile, the pedometer has a central processor unit (CPU) 106 that calculates a step count per predetermined time (walking pitch) and a step count depending upon the walk signal from the binarization means 105 and controls the conversion gain of the charge-voltage converting means 102, input means 107 structured by an input switch or the like, display means 108 that is structured by a liquid-crystal display device and for displaying a step count, etc., sound notification means 109 that is structured by a piezoelectric speaker or the like and for notifying a setting completion, an abnormality or the like by sound, oscillation means 110 that generates a reference clock signal, and storage means 111 structured by a non-volatile memory such as a flash memory.

The charge-voltage converting means 102 has an operation amplifier 112, a discharge resistor 113, a charge-voltage conversion capacitor 114, gain-control capacitors 115, 116 and gain-control switch means 117. The switch means 117 has a plurality of gain-control switches 118, 119 connected parallel with the capacitor 114. The switches 118, 119 are connected in series with the capacitors 115 and 116, respectively. The switches 118, 119 may be mechanical switches or semiconductor switches.

The storage means 111 stores a program for the CPU 106 to execute, walking-pitch upper-limit and lower-limit values representative of a predetermined walking pitch range to be obtained in the usual walking, and open/close status of the switch means 117 (i.e. switches 118, 119) in the case conversion-gain setting has been made for the charge-voltage converting means 102. The predetermined walking pitch range is set such that the upper limit value of the range is smaller than twice the lower-limit value (e.g. lower-limit value: 30 steps/minute, upper-limit value: 135 steps/minute). Due to this, in the event such a situation occurs that a walk is not tc be detected on each step, determination is made as detection abnormality.

Here, the sensor 101, the charge-voltage converting means 102, the filter means 103, the amplification means 104 and the binarization means 105 constitute walk detecting means that detects a walk and outputs a corresponding waking signal. The storage means 111 constitute first storage means that stores a predetermined walking pitch range and second storage means that stores the open/close status of the switch means 117 (specifically, switches 118, 119). Meanwhile, the capacitors 114 - 116 in plurality constitute a capacitor circuit.

The CPU 106 constitutes calculating means that calculates a walking pitch and a step count based on the walk signal from the binarization means 105, and control means that controls the detection sensitivity (specifically, conversion gain of the charge-voltage converting means 102) of the walk detecting means such that the walking pitch, calculated based on the walk signal, comes within the predetermined pitch range.

The gain control of the charge-voltage converting means 102 is performed under auto control at the CPU 106 or manual control at the input means 107, by setting in any of an auto control mode to automatically control the detection sensitivity of the walk detecting means and a manual control mode to manually control the detection sensitivity of the walk detecting means by means of the input means 107. In the case of manually setting the conversion gain of the charge-voltage converting means 102 from the input means 107, the CPU 106 performs open-close control of the switch means 117 (specifically, switches 118, 119) in accordance with the gain set value inputted from the input means 107. Due to this, the conversion gain of the charge-voltage converting means 102 is set to the foregoing gain set value.

Here, the input means 107 and the CPU 106 constitute control means.

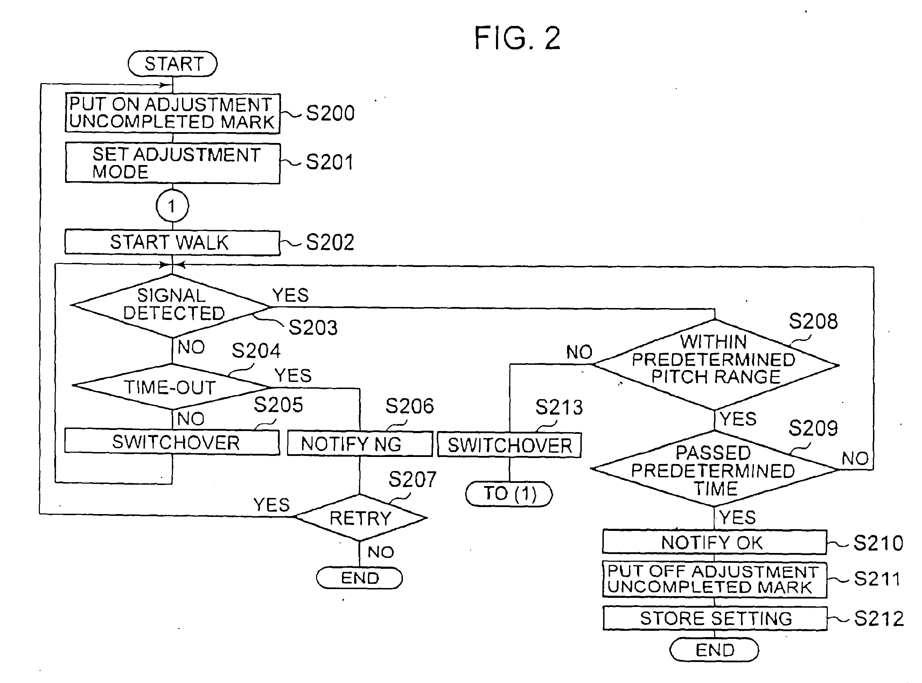

Fig. 2 is a flowchart showing a process for the pedometer according to the first embodiment of the invention, wherein shown is the process which the CPU 106 executes the program stored in the storage means 111.

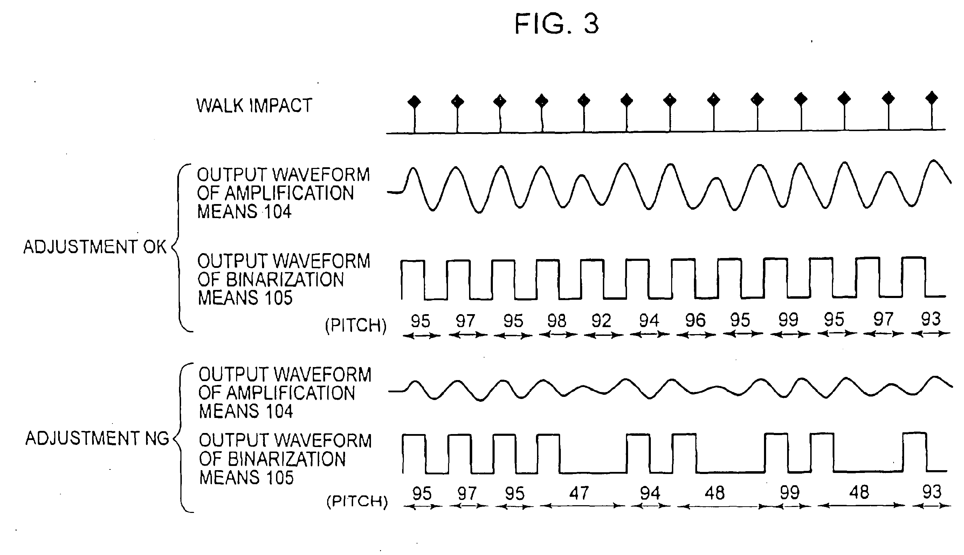

Meanwhile, Fig 3,is a timing chart in the first embodiment wherein there are depicted both of the timing chart where the conversion gain of the charge-voltage converting means 102 is properly adjusted/controlled (adjusted well) and the timing chart where the conversion gain is not properly adjusted/controlled (adjusted not well).

Each time a walk impact occurs in accordance with user's walking, the sensor 101 detects a walk and outputs a corresponding charge walk signal. The charge-voltage converting means 102 converts the walk signal from the sensor 101 into a corresponding voltage walk signal to output. The filter means 103 outputs a walk signal removed of noise from the output signal from the charge-voltage converting means 102. The amplification means 104 amplifies the walk signal from the filter means 103 and outputs a walk signal in an analog form. The binarization means 105 converts the analog-form walk signal into a digital-form walk signal to output. The CPU 106 calculates a walking pitch depending upon a predetermined number of walk signals including the newest walk signal from the binarization means 105.

Where the charge-voltage converting means 102 is gain-controlled properly, the CPU 106 can correctly calculate a walking pitch corresponding to each walk signal (i.e. each walk impact). In Fig. 3, the walking pitch calculated is 92 - 99 steps per minute under proper gain control. Where gain control is improper, the walking pitch is 47 steps per minute that is significantly smaller as compared to the pitch of the usual walking because of the possible non-detection of a walk signal corresponding to a walk impact. Accordingly, by setting the predetermined range of walking pitch at 30 - 135 steps per minutes for example, determination can be made as to whether or not the gain of the charge-voltage converting means 102 has been controlled properly depending upon whether or not the walking pitch calculated by the CPU 106 is within the range of walking pitch.

Now explanation is made on the operation of the pedometer according to the first embodiment by using Figs. 1 to 3.

At first, the user wears the pedometer on his/her wrist or the like and starts the operation thereof. At this time, the gain control information of the amplification means 104 and the like is not yet stored in the storage means, e.g. when used for the first time after purchase or when used by resetting the setting information, the CPU 106 displays an adjustment completion mark, indicating that adjustment/control is not yet completed, on the display means 108 (step S200).

In this state, the operation mode of the pedometer is set in an auto control mode by user's operation to the input means 107 (step S201). In case walking is started (step S202), the acceleration sensor 101 outputs a charge signal (walk signal) corresponding to the walk each time detecting a walk (Fig. 3 walk impact) of the user.

The charge-voltage converting means 102 converts the charge walk signal of from the sensor 101 into a corresponding voltage walk signal and outputs same.

The switches 118, 119 of the charge-voltage converting means 102 are open in the initial state, and hence the gain of the charge-voltage converting means 102 is minimum in the initial state. The charge-voltage converting means 102 converts the walk signal from the sensor 101 into a voltage at a minimum conversion gain and outputs it as a walk signal to the filter means 103.

incidentally, the CPU 106, when controlling the conversion gain of the charge-voltage converting means 102, performs open-close control of the switches 118, 119 such that the gain of the charge-voltage converting means 102 increases in order from the minimum value. Namely, the CPU 106 controls the gain of the charge-voltage converting means 102 in a manner changing monotonously. Due to this, control is made to monotonously change the capacitance value of the capacitor circuit.

The filter means 103 outputs a walk signal removed of noise moved from the signal of from the charge-voltage converting means 102.

The amplification means 104 amplifies, at a predetermined gain, the walk signal from the filter means 103 and outputs a walk signal in an analog signal form to the binarization means 105.

The binarization means 105 waveform-shapes the walk signal from the amplification means 104 and outputs a walk signal in a digital signal form.

The CPU 106 determines whether or not a walk signal is detected from the binarization means 105, i.e. whether or not a walk signal was inputted from the binarization means (step S203). When it is determined that a walk signal is not detected, from the binarization means 105, it determines whether or not a predetermined time has passed, i.e. whether walk signals are not detected continuously for a predetermined time (i.e. predetermined steps) (step S204). When it is determined that a predetermined time has not passed, the switches 118, 119 are controlled to open and close thereby increasing the conversion gain of the charge-voltage converting means 102, followed by returning to the process step S203.

The CPU 106, when it is determined that a predetermined time has passed at the process step S204, causes the sound notification means 109 to notify a fact that sensitivity adjustment could not be properly made despite adjusting/controlling the gain of the charge-voltage converting means 102 (step S206).

In case the user operates the input means 107 and designates re-adjustment execution (retry), the CPU 106 detects a retry command (step S207) and returns to the process step S200 where the foregoing process is repeated. The CFU 100, when determined that a retry command was not inputted from the input means 107 at the process step S207, terminates the sensitivity adjustment/control process.

Meanwhile, the CPU 106, when it is determined that a walk signal is detected from the binarization means 105 at the process step S203, calculates a pitch corresponding to the walk signal depending upon a predetermined number of walk signals including the foregoing walk signal and determines whether or not the calculated pitch is within a predetermined pitch range stored in the storage means 111 (step S208).

When it is determined that a predetermined time has passed (i.e walk signals are detected continuously for a predetermined time (predetermined number of steps) after it is determiend that the calculated pitch is within the predetermined pitch range (step S209), the CPU 106 causes the sound notification means 109 to notify a fact that sensitivity adjustment was normally completed (OK notification) (step S210).

Then, the CPU 106 puts off the adjustment non-completion mark displayed on the display means 108 (step s211) and then terminates the process by storing, in the storage means 111, the information about the open-close set status of the switch means 117 (specifically, open-close set status on the switches 118, 119) controlled to open and close for the gain adjustment (step S212). Because the storage means 111 is configured by a non-volatile memory, the stored information is held without erasure even if powered off.

In the case that power is booted up to start a step counting again or so after once terminating a step counting, the CPU 106 performs open-close control of the switch means 117 (specifically, switches 118, 119) in a manner assuming the open/close status as stored in the storage means 111 and makes the conversion gain of the charge-voltage converting means 102 to a proper value, thereafter starting a step counting.

When it is determined that the calculated pitch is out of the predetermined pitch range at the process step S208, the CPU 106 performs open-close control of the switch means 117 (specifically, switches 118, 119) to thereby change the conversion gain of the charge-voltage converting means 102 (in this case, the switches 116, 119 are controlled to open and close in a manner the conversion gain increases monotonously), thus controlling the capacitance value of the capacitor circuit. Returning to the step S202, the foregoing process is repeated (step S213).

After adjusting the detection sensitivity of the walk detecting means, the input means 107 is operated to enter a step counting mode, thus starting a step counting. The CPU 106 sets the charge-volcage converting means 102 at a gain as stored in the storage means 111 and calculates a cumulative step count depending upon the walk signal inputted through the sensor 101, the charge-voltage converting means 102, the filter means 103, the amplification means 104 and the binarization means 105, thereby displaying the walk step count on the display means 108.

Meanwhile, where manually setting the conversion gain of the charge-voltage converting means, the user operates the input means 107 to thereby set the pedometer operation mode in a manual control mode. In this state, the open/close status of the switch means 117 (specifically, switches 118, 119) is inputted from the input means 107, to set the conversion gain of the charge-voltage converting means 102.

The information, representative of switch-means open/close status inputted from the switch means 117, is stored in the storage means 111.

In this state, the input means 107 is operated to enter a step counting mode thus starting a step counting. The CPU 106 sets the charge-voltage converting means 102 at a gain as stored in the storage means 111, to calculate a walk step count depending upon the walk signal and display the walk step count on the display means 108.

Incidentally, in case the CPU 106 calculates a walking pitch together with the walk step count so that the display means 108 can display, besides a walk step count, a walking pitch and a fact of whether or not the walking pitch is within the walking pitch range stored in the storage means 111, determination can be made as to whether or not the conversion gain of the charge-voltage converting means 102 manually established is proper. Meanwhile, the CPU 106, if configured to output an alert from the sound notification means 109 in the case the walking pitch is out of the range stored in the storage means 111, is allowed to determine more easily whether or not the conversion gain of the charge-voltage converting means 102 established manually is proper.

As described so far, according to the pedometer of the first embodiment, constituent element variation and individual-based effect are suppressed to enable a fine adjustment of detection sensitivity and a step counting freely without restrictions at all and more correctly.

Meanwhile, the walking pitch upon adjustment is not regulated at a particular value but provided with a certain width. This enables an adjustment in the usual walking state of the user, thus providing an effect not to give an unsuited feeling to the user.

Meanwhile, because adjustment is possible under the condition well matched to the usual walking, there is exhibited an effect that detection accuracy improves in the actual detection of walking.

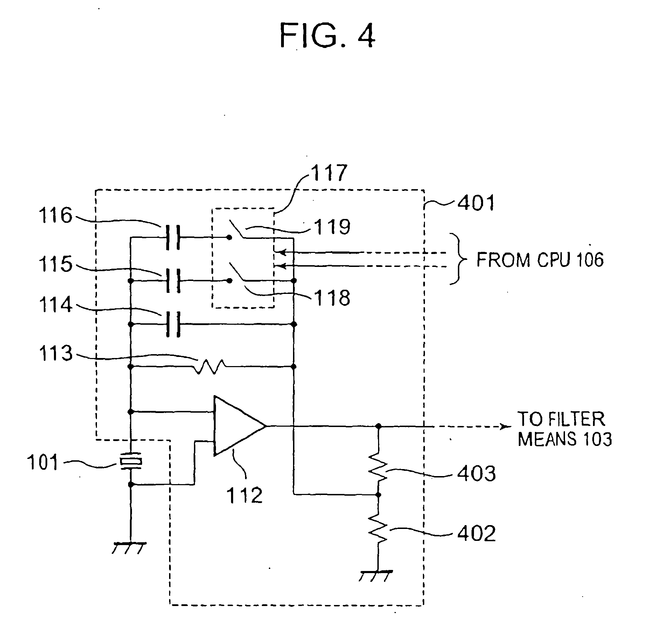

Fig. 4 is a block diagram of a charge-voltage converting means for use on a pedometer according to a second embodiment of the invention, wherein like reference numeral is attached to like element of Fig. 1.

In the second embodiment of the charge-voltage converting means 401, resistances 402, 403 for constituting an amplifier circuit are provided together with an operation amplifier 112, a resistance 113, etc. in the output of the operation amplifier 112. Due to this, the charge-voltage converting means 401 is configured having an amplifier circuit. Meanwhile, the capacitor circuit formed by capacitors 114 - 116 forms a feedback circuit for the amplifier circuit.

In response to the control signal from the CPU 106, the switch means 117 (switches 118, 119) are controlled to open and close thereby controlling the conversion gain.

By thus providing an amplifier circuit in the charge-voltage converting means 401, the conversion gain can be increased with a simple structure.

Meanwhile, even where the amplifier circuit and the filter circuit are not independent, sensitivity can be adjusted without giving an effect upon the filter circuit.

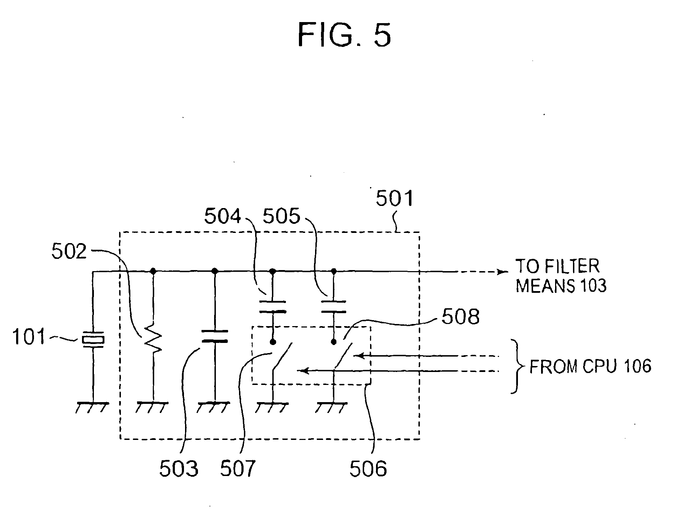

Fig. 5 is a block diagram of a charge-voltage converting means for use on a pedometer according to a third embodiment of the invention, wherein like reference numeral is attached to like element of Fig. 1.

The charge-voltage converting means 501.in the third embodiment is connected, in parallel, with a discharge resistance 502, a capacitor 503, conversion-gain control capacitors 504, 505 and switch means 506 (specifically, switches 503, 508) connected in series to the capacitors 504, 505, instead of using an operation amplifier.

In response to the control signals from the CPU 106, the switch means 506 (switches 507, 508) are controlled to open and close, thus controlling the conversion gain.

In this manner, because the charge-voltage converting means 501 is formed only by passive elements without using active elements such as an operation amplifier and the like, a structure is available that is simple and at low cost.

Application is possible to various types of pedometers including a pedometer in a scheme to be used worn on the wrist, a pedometer in a scheme to be used worn on the waist, and a pedometer in a scheme to be used carrying in a bag or the like.

It should be understood that more than two conversion-gain control capacitors may be provided and that the conversion-gain control capacitors may be controlled independently.

The aforegoing description has been given by way of example only and it will be appreciated by a person skilled in the art that modifications can be made without departing from the scope of the present invention.

## Claims

1. A pedometer comprising:
walk detecting means having a sensor that detects a walk and outputs a corresponding charge walk signal and charge-voltage converting means that converts a walk signal of from the sensor into a corresponding voltage walk signal to output, to thereby detect a walk and output a corresponding walk signal;
calculating means that calculates a step count based on the walk signal from the walk detecting means; and
control means that controls a detection sensitivity of the walk detecting means by controlling a gain of the charge-voltage converting means.

2. A pedometer according to claim 1, comprising input means for inputting a detection sensitivity of the walk detecting means,
the control means, in a manual control mode for manually controlling the detection sensitivity of the walk detecting means, controlling the gain of the charge-voltage converting means to a detection sensitivity inputted from the input means.

3. A pedometer according to claim 1 or 2, comprising first storage means that stores a predetermined walking pitch range,
the calculating means further calculating a walking pitch depending upon the walk signal,
the control means, in an auto control mode for automatically controlling the detection sensitivity of the walk detecting means, controlling the gain of the charge-voltage converting means such that the walking pitch, calculated by the calculating means, comes within the walking pitch range stored in the first storage means.

4. A pedometer according to claim 3, wherein the predetermined walking pitch range is set with an upper limit value smaller than twice a lower value.

5. A pedometer according to any one of claims 1 to 4, wherein the charge-voltage converting means has a capacitor circuit having a plurality of capacitors for determining a gain, and switch means for controlling a capacitance value of the capacitor circuit,
the control means controlling the gain of the charge-voltage converting means by controlling the capacitance value of the capacitor circuit through open-close controlling the switch means.

6. A pedometer according to claim 5, comprising second storage means that stores an open/close status of the switch means,
the control means storing an open/close status of the switch means, placed under open-close control, in the second storage means, and controlling, before starting a step counting, the switch means to the open/close status stored in the storage means.

7. A pedometer according to claim 5 or 6, wherein the charge-voltage converting means has an amplifier circuit that outputs a walk signal corresponding to a voltage which the walk signal of from the sensor is amplified, the capacitor circuit being a feedback circuit for the amplifier circuit.
